(19) Europäisches Patentamt
European Patent Office
Office européen des brevets

(11) Publication number: 0 556 476 A1

# (12) EUROPEAN PATENT APPLICATION

(21) Application number: **92121193.4**

(51) Int. Cl.5: **G06F 15/70**

(22) Date of filing: **11.12.92**

(30) Priority: **21.01.92 JP 30181/92**

(43) Date of publication of application: **25.08.93 Bulletin 93/34**

(84) Designated Contracting States: **DE FR GB**

(71) Applicant: **EZEL INC.**
**2-22-2 Koishikawa**
**Bunkyo-ku Tokyo 112(JP)**

(72) Inventor: **Kumagai, Ryohei**
**c/o EZEL Inc., 2-22-2, Koishikawa**
**Bunkyo-ku, Tokyo 112(JP)**

(74) Representative: **Patentanwälte Grünecker, Kinkeldey, Stockmair & Partner**
**Maximilianstrasse 58**
**D-80538 München (DE)**

## (54) Method for detecting the location of human beings in three-dimensions.

(57) A detective method of the location of human being in three dimension, comprising steps: i ) inputting a spatial image expecting existence of human being; ii ) abstracting area with density values within a predetermined range of a part of a hair part of a head from the image in i ); iii ) supporting the area as a part of human hair part of the head when the top of the abstracted area shapes arch; iv ) supposing a horizontal width to be constant with respect to the area of said part supposed to be a hair part of a head; v ) calculating the distance from a lens to a human being from the horizontal width of the image of the human being.

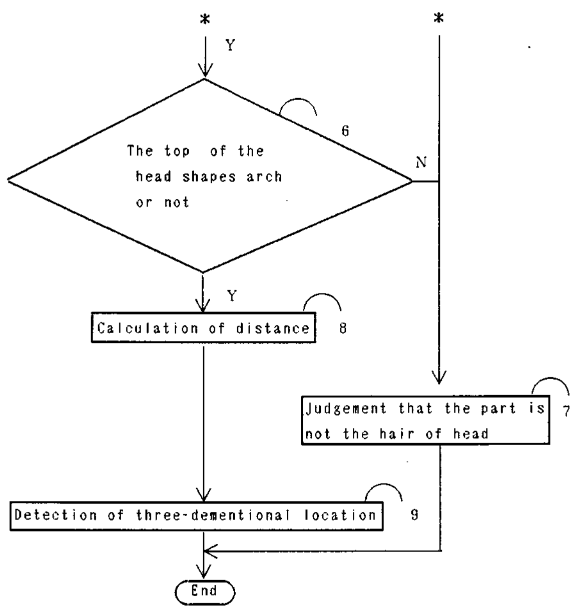


EP 0 556 476 A1

## -FIELD OF THE INVENTION-

This invention relates to a detective method of the location of human being in three-dimension especially to that for measuring in three dimension by input system of a single lends.

## -BACKGROUND OF THE INVENTION-

Conventionally two methods are well known as a method of the three-dimension measurement: a method using parallax in input system of two-lens and a method producing parallax by moving input system of a single-lens. However, it is not easy for both of them to identify pixels of the two images. Then input system of the former method becomes large size, and it takes long for the latter method to input.

## -SUMMARY OF THE INVENTION-

The present invention is to solve the above conventional problems, and has an object to provide a detective method of the location of human being in three-dimension by an input system of a single-lens.

The detective method of the location of human being in three-dimension according to the present invention considers the range of density of human hair of the head as constant and abstracts the part of hair of the head, and calculates the distance from a camera to a human being, assuming the horizontal width in the part of hair of the head as constant.

It is possible to detect easily the location of human being in three-dimension using a simple input system by **DETECTIVE METHOD OF THE LOCATION OF HUMAN BEING IN THREE DIMENSION** according to the present invention.

## BRIEF DESCRIPTION OF THE DRAWINGS

Figure 1 shows a flowchart for an embodiment of this invention.

Figure 2 shows a drawing for the width of the part of hair of the head.

Figure 3 shows a histogram of part of hair of the head.

Figure 4 shows an image of the position of hair of the head and a camera.

Figure 5 shows an image of the intersection of tangent of an arched line.

Figure 6 shows an image of the intersection of tangent of non-arched line.

"W" shows horizontal width of an image.

"W1" shows horizontal width of head.

"W2" shows horizontal width of head.

## -PREFERRED EMBODIMENT OF THE PRESENT INVENTION-

Hereinafter an embodiment of the detective method of the location of human being in three dimension according to the present invention is described with reference to the attached drawings.

Figure 2 shows an image of 2 people standing. The each horizontal width of the part of hair of the head is shown by W1 and W2.

In our country, human hair generally has rather low density value (Figure 3), and it is possible to estimate the range of the density value.

The method to abstract the part of hair of the head is explained. At first, an image is input (step 1), and the input image is binarized through threshold of brightens 100 (step 2. The threshold is density 100 because it is clear from experience that brightness value of hair is always under hundred in door. Therefore, it is possible to separate the part of hair of the head and the other parts by binarization through density 100.

As there is the parts with the same brightness of the part of hair in the binarized image, they should be reduced. The area of each figure is calculated by labeling the binarized image (step 3) and counting the number of pixels of the histogram. As the maximum area and the minimum area of the part of hair of the head taken by the camera is able to be calculated beforehand, only the figure in the range of the both predetermined values is a candidate of the part of hair of the head (step 5).

The candidate figure of the part of the top of hair of the head is judged whether it shapes arch or not (step 6). As there is possibility that non-hair part of the head is included in the candidate even if the density value and the area are within the predetermined value, they must be reduced. The top part of human hair of the head is generally shaped an arch. According to the characteristic, it is judged whether a part is a hair part of the head or not. It is judged whether it shapes an arch or not by curvature: the curvature of the top part of the candidate is within the predetermined value or not.

As shown in Figure 5, the distance of intersection between tangents on the shape of an arch is short, and the change of curvature is within the predetermined value. However, as in Figure 6, the distance of intersection between tangents of a figure of non-arch is long and the change of curvature is unstable. If the change of curvature is within the predetermined range, it is recognized as an arch, and the figure is the part of human hair of the head.

When it is judged that the area is not within the fixed range on step 5 and the shape is not arched on step 6, it is judged that the figure is not a part of the hair on step 7.

The distance between a camera and a human being is calculated (step 8). The horizontal width of the part of the hair of the head is supposed to be constant, so as to simplify the calculation. Here, suppose the distance from the lens to the image surface is "di", the distance from the lens to a human being is "do", the horizontal width of the head part of the image surface is "w" and the horizontal width of the head part of human being is "wo" (constant), then

$$do = \frac{wo}{w} \times di$$

As shown from the formula above, the distance "do" is immediately calculated. The value of coordinate of the horizontal and the vertical direction are easily calculated by well-known method. Through these calculations, the location of a human being in three dimension is detected (step 9).

As above mentioned above, it is possible to detect three-dimensional location including depth (distance) using a simple system of a single-lens by the present invention.

## Claims

1. A detective method of the location of human being in three dimension, comprising steps:
   i ) inputting a spatial image expecting existence of human being;
   ii ) abstracting area with density values within a predetermined range of a part of a hair part of a head from said image in i );
   iii ) supporting said area as a part of human hair part of the head when the top of said abstracted area shapes arch;
   iv ) supposing a horizontal width to be constant with respect to said area of said part supposed to be a hair part of a head;
   v ) calculating the distance from a lens to a human being from the horizontal width of the image of said human being.

2. A detective method of the location of human being in three dimension, claimed in claim 1, wherein a figure is judged arch when a change of curvature on the top of it is within a predetermined value.

3. A detective method of the location of human being in three-dimension, claimed in claim 1, wherein said range is recognized as a part of hair of the head when said range of said density values in the predetermined is a area value in said predetermined range.

Figure 1

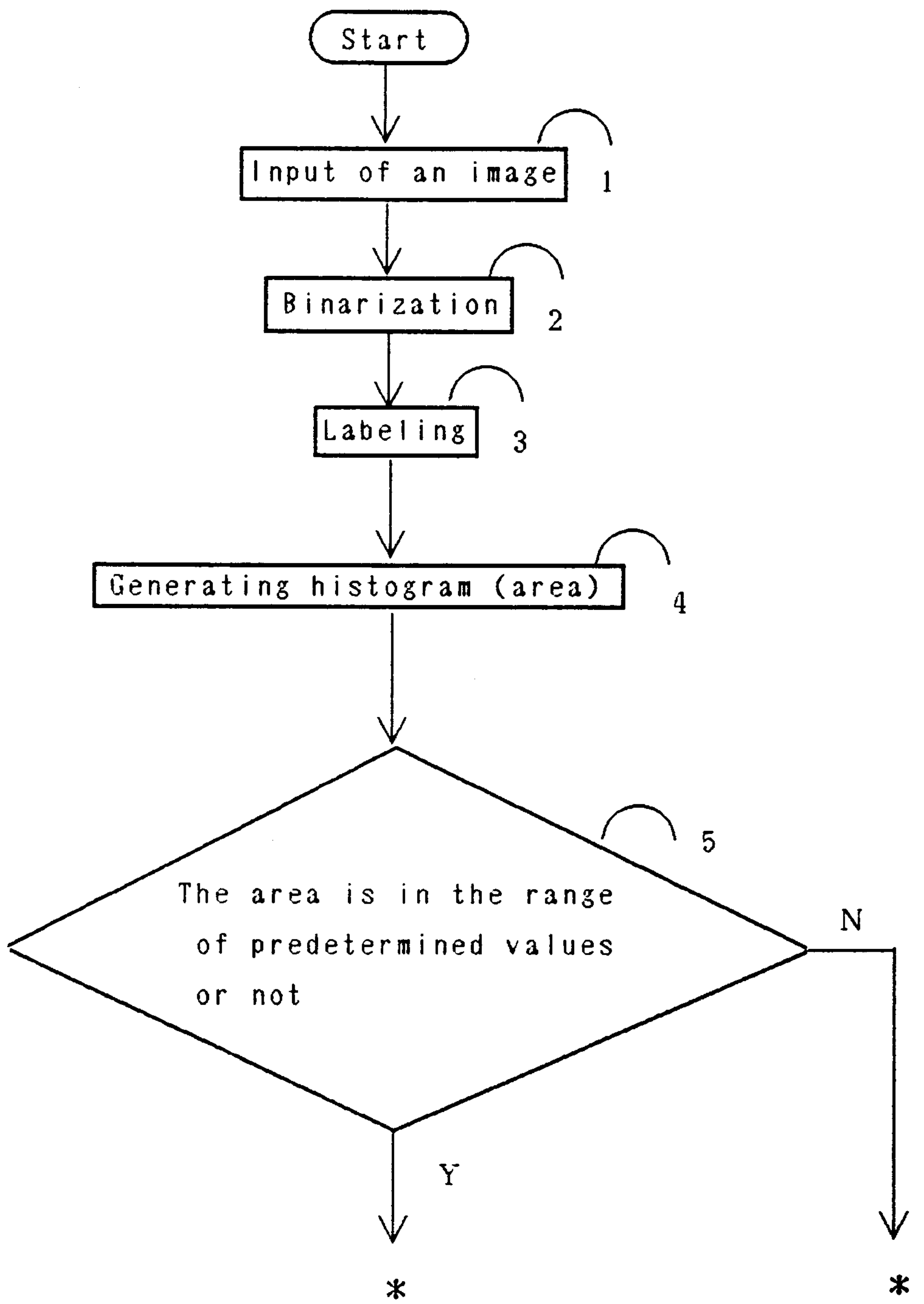
Start
Input of an image
1
Binarization
2
Labeling
3
Generating histogram (area)
4
5
The area is in the range of predetermined values or not
N
Y
*
*

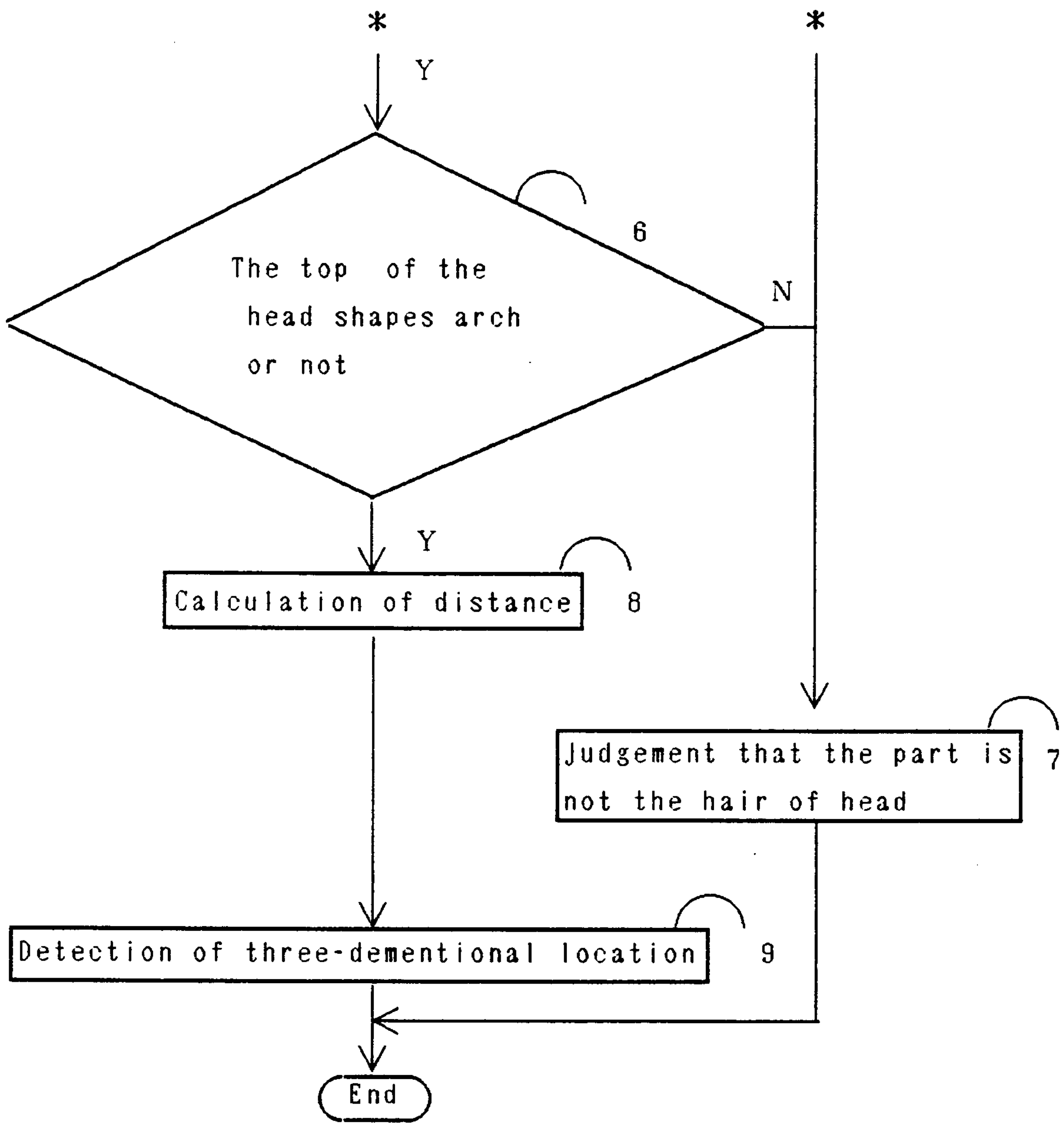
*
*
Y
The top of the head shapes arch or not
6
N
Y
Calculation of distance
8
Judgement that the part is not the hair of head
7
Detection of three-dementional location
9
End

Figure 2

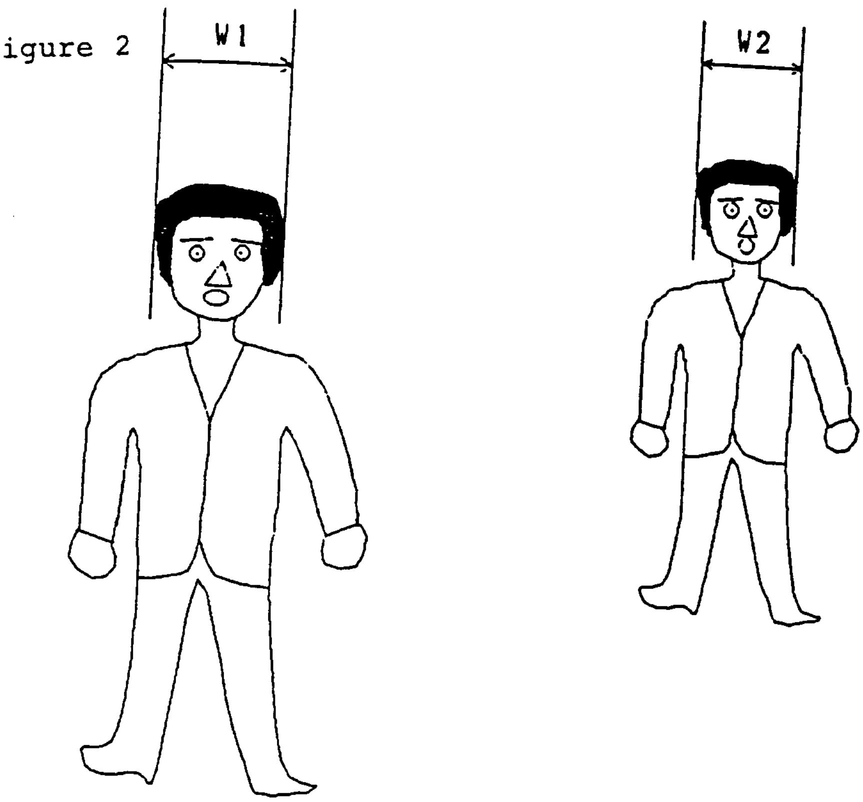


Figure 3

Histogram of The Part of Hair of The Head

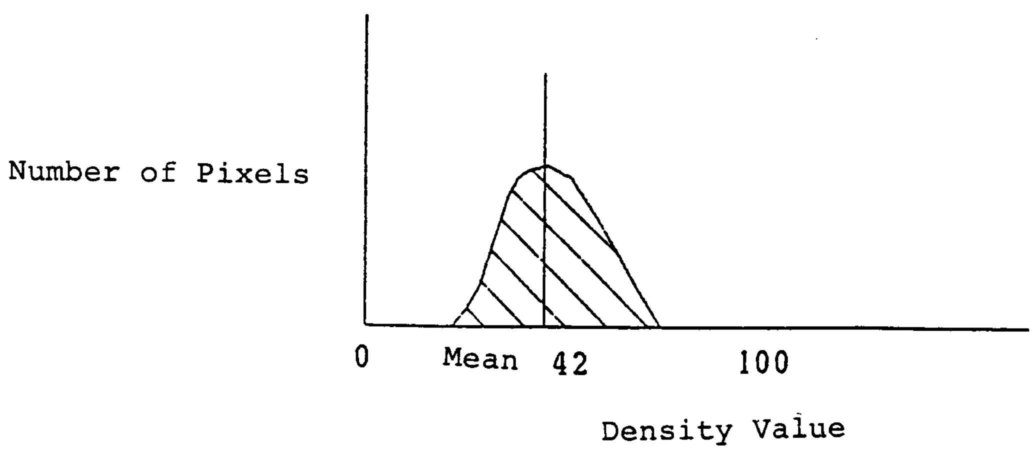

Figure 4

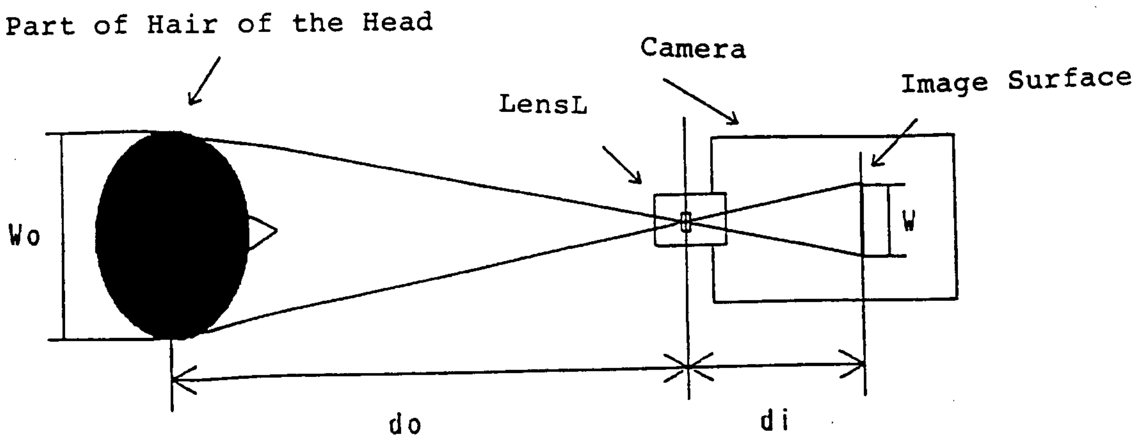


Figure 5

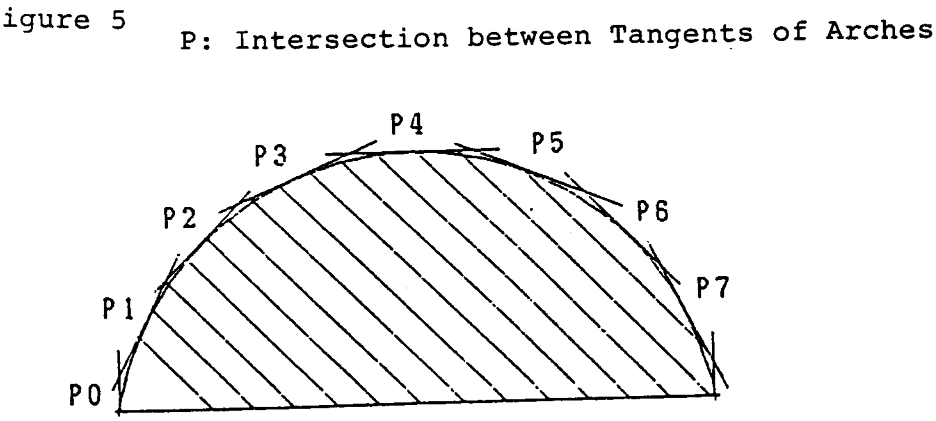

Figure 6

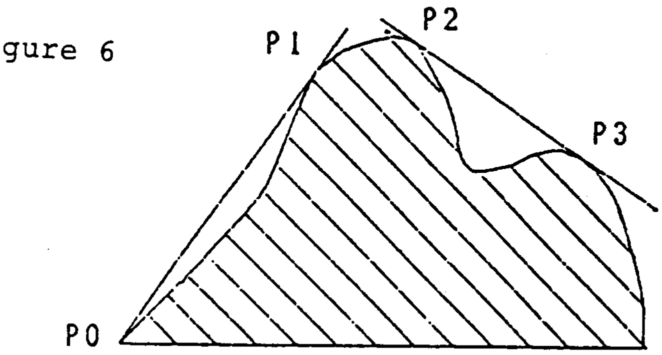

European Patent Office

# EUROPEAN SEARCH REPORT

Application Number

EP 92 12 1193

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN<br>vol. 15, no. 266 (P-1223)5 July 1991<br>& JP-A-30 85 685 ( NIPPON TELEGR. & TELEPH. CORP. )<br>* abstract *<br>--- | 1 | G06F15/70 |
| P,A | PATENT ABSTRACTS OF JAPAN<br>vol. 16, no. 361 (P-1396)5 August 1992<br>& JP-A-41 11 080 ( MATSUSHITA ELECTRIC IND CO )<br>* abstract *<br>--- | 1 | |
| A | 'proceedings of the 1989 ieee international conference on systems, man, and cybernetics'<br>17 November 1989 , HYATT REGENCY, CAMBRIDGE, MASSACHUSETTS , CAMBRIDGE, MASSACHUSETTS, USA<br>Y.C. Shiu and Shaheen Ahmad: '3D location of Circular and Spherical Features by Monocular Model-Based Vision', pages 576-581<br>* abstract; figures 2.1.1,2.1.3 *<br>* figure 3.2.2 *<br>* page 580, left column, line 8 - line 19 *<br>--- | 1 | TECHNICAL FIELDS SEARCHED (Int. Cl.5 )<br>G06F |
| A | DATABASE WPIL<br>Section EI, Week 8910,<br>Derwent Publications Ltd., London, GB;<br>Class S05, AN 89-077151<br>& US-A-4 807 163 (R.D.GIBBONS)<br>* abstract *<br>----- | 1 | |

The present search report has been drawn up for all claims

| Place of search | Date of completion of the search | Examiner |
|---|---|---|
| THE HAGUE | 22 MAY 1993 | VAN DOREMALEN J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document